# EUROPÄISCHE PATENTSCHRIFT

(11) **EP 4 598 787 B1**
(45) Veröffentlichungstag und Bekanntmachung des Hinweises auf die Patenterteilung: **11.11.2026**
(21) Anmeldenummer: 23782885.0
(22) Anmeldetag: 28.09.2023
(51) Int. Cl.: B60T 17/00

(54) **HEIZUNGSVORRICHTUNG FÜR EINE LUFTAUFBEREITUNGSEINHEIT UND LUFTAUFBEREITUNGSEINHEIT**
HEATING DEVICE FOR AN AIR PROCESSING UNIT AND AIR PROCESSING UNIT
DISPOSITIF DE CHAUFFAGE POUR UNITÉ DE TRAITEMENT D'AIR ET UNITÉ DE TRAITEMENT D'AIR

(30) Priorität: 06.10.2022 DE 102022125830
(43) Veröffentlichungstag der Anmeldung: 13.08.2025
(73) Patentinhaber: KNORR-BREMSE Systeme für Nutzfahrzeuge GmbH, 80809 München (DE)
(72) Erfinder: SCHNITTGER, Karsten, 80935 München (DE); ERTL, Thomas, 80935 München (DE)
(86) Internationale Anmeldenummer: PCT/EP2023/076899
(87) Internationale Veröffentlichungsnummer: WO 2024/074394

(56) Entgegenhaltungen:
- CN-U- 203 591 687
- CN-U- 203 971 704
- CN-U- 217 124 762

## Beschreibung

Die vorliegende Erfindung betrifft eine Heizungsvorrichtung für eine Luftaufbereitungseinheit mit wenigstens einer ersten Baugruppe und einer zweiten Baugruppe. Des Weiteren betrifft die Erfindung eine Luftaufbereitungseinheit mit einer solchen Heizungsvorrichtung.

Bei Systemen zur Luftaufbereitung gibt es üblicherweise ein Ablassventil, mit dem feuchte Luft sowie Kondenswasser ausgeblasen werden kann.

In der Druckschrift CN203971704U wird eine Methode und ein Gerät zur automatischen Behandlung von Störungen eines Lufttrockners beschrieben. In der CN217124762U wird ein Steuermodul für eine Luftaufbereitungseinheit eines Fahrzeugs beschrieben und die CN203591687U offenbart einen Rückfluss-Lufttrockner.

Um ein Einfrieren dieses Ablassventil bei niedrigen Temperaturen zu verhindern, wird in der Nähe des Ventils in der Regel eine elektrisch betriebene Heizung platziert. Wenn die Heizung bestromt wird, erwärmt sich der Heizungskörper und damit auch der Gehäusebereich um das Ablassventil.

Dabei werden zumeist zwei verschiedenen Versionen solcher Luftaufbereitungssysteme eingesetzt, wobei in einer ersten Variante die Lufttrocknereinheit nicht am Kern- bzw. Hauptmodul befestigt ist und die Lufttrocknereinheit eine externe Heizung aufweist, die über ein Kabel mit Strom versorgt wird. In einer zweiten Variante kann die Lufttrocknereinheit am Kern- bzw. Hauptmodul befestigt sein, wobei die Heizung in der Lufttrocknereinheit untergebracht ist und von der Steuereinheit (ECU) des Kernmoduls mit Strom versorgt wird.

In dieser zweiten Variante müssen Teile der Heizungskomponente über die Modulgrenzen hinweg in der Lufttrocknereinheit mit dem Ablassventil als auch im Kernmodul, mit der Steuereinheit, untergebracht werden.

Um beim Transport der Module des Luftaufbereitungssystems Schäden an der Heizungskomponente zu vermeiden ist es sinnvoll die Heizungskomponente in mindestens zwei (Unter-)Baugruppen aufzuspalten, die in dem jeweiligen Modul der Luftaufbereitungsanlage untergebracht sind und höchstens wenig bzw. geringfügig herausstehen bzw. aus dem jeweiligen Modul hervorragen.

Darüber hinaus dürfen die Heizungsbaugruppen beim Montageprozess nicht aus dem jeweiligen Modul herausfallen. Ferner muss die Schnittstelle zwischen den Heizungsbaugruppen muss gegen Spritzwasser geschützt sein, um elektrischen Kurzschlüssen, Korrosion und/oder dergleichen vorbeugen zu können.

Es ist die Aufgabe der vorliegenden Erfindung, eine Heizungsvorrichtung der eingangs genannten Art in vorteilhafter Weise weiterzubilden, insbesondere dahingehend, dass eine einfache, kostengünstige sowie sichere Montage erlaubt wird, wobei eine Montage in Fehlposition verhindert und vorzugsweise eine automatisierte Montage ermöglicht werden soll, sodass eine sichere und widerstandsfähige Heizungsvorrichtung bereitstellbar ist. Des Weiteren ist es Aufgabe der Erfindung ein Luftaufbereitungssystem mit einer solchen Heizungsvorrichtung anzugeben.

Diese Aufgabe wird erfindungsgemäß gelöst durch eine Heizungsvorrichtung gemäß Anspruch 1 und ein Luftaufbereitungssystem gemäß Anspruch 12.

Danach ist vorgesehen, dass eine Heizungsvorrichtung für eine Luftaufbereitungseinheit mit wenigstens einer ersten Baugruppe und einer zweiten Baugruppe ausgebildet ist, wobei die erste Baugruppe wenigstens ein Aufnahmeelement und die zweite Baugruppe wenigstens ein Fixierelement aufweist. Das wenigstens eine Aufnahmeelement und das wenigstens eine Fixierelement sind zum Eingriff ineinander ausgebildet, zur zumindest temporären Verbindung der ersten Baugruppe und der zweiten Baugruppe miteinander, wobei das Aufnahmeelement und das Fixierelement derart ausgestaltet sind, vorzugsweise derart mit einem Orientierungselement ausgestaltet sind, dass das Aufnahmeelement und das Fixierelement in einem vordefinierten Ausrichtungsbereich, insbesondere einem vordefinierten Winkelbereich, gegenübereinander verbindbar sind.

Die Erfindung basiert auf dem Grundgedanken, dass eine Heizungsvorrichtung aus mehreren Baugruppen bestehend in kompakter Bauform und insbesondere in einer Luftaufbereitungseinheit integriert bereitgestellt werden kann.

Die wenigstens zwei Baugruppen der Heizungsvorrichtung können miteinander verbunden bzw. verschränkt werden, um eine elektrische Verbindung bereitzustellen. Auf diese Weise kann die Luftaufbereitungseinheit, der die Heizungsvorrichtung zugeordnet ist, in mehrere Module unterteilt und kompakt ausgestaltet werden.

Ferner kann eine Montage der Luftaufbereitungseinheit, vorzugsweise in Form einer Lufttrocknereinheit, automatisiert werden, wobei die erste Baugruppe, beispielsweise in einem Luftaufbereitungsmodul, und die zweite Baugruppe der Heizungsvorrichtung, beispielsweise in einem Kern- bzw. Hauptmodul der Luftaufbereitungseinheit, platziert und verschraubt werden. Die elektrische Kontaktierung der Heizungsvorrichtung kann mittels der vorliegenden Erfindung prozesssicher erfolgen.

Eine spezifische geometrische Ausgestaltung wenigstens einer der beiden Baugruppen ermöglicht es, dass die beiden Baugruppen nur in einer bestimmten Ausrichtung gegenübereinander bzw. in einem vordefinierten Ausrichtungs-/Winkelbereich miteinander verbindbar sind.

Die beiden Heizungsbaugruppen müssen in Winkellage der Steckerverbindung und ihrer radialen Lage so ausgerichtet sein das die Steckerverbindung immer sicher einen elektrischen Kontakt herstellen können. Die Bauteiltoleranzen und Toleranzen der Vorrichtungen für den Fügeprozess in der Montage können hierbei berücksichtigt werden, indem eine Vorpositionierung erfolgen kann und ferner die einzelnen Elemente der Heizungsvorrichtung zum Ausgleich von radialen Versätzen gegenüber einander ausgebildet sind.

Nach einer bevorzugten Ausführungsform ist die erste Baugruppe und/oder die zweite Baugruppe wenigstens teilweise elastisch verformbar ausgebildet ist, insbesondere ist das Aufnahmeelement und/oder das Fixierelement wenigstens teilweise elastisch verformbar.

Insbesondere können das Aufnahmeelement und/oder das Fixierelement ein zumindest teilweise elastisch verformbares Material aufweisen.

Alternativ oder ergänzend kann eine teilweise elastische Verformbarkeit beispielsweise durch eine entsprechende geometrische Ausgestaltung des Aufnahmeelementes und/oder des Fixierelementes bereitgestellt werden.

Gemäß einer Ausführungsform weist das Fixierelement und/oder das Aufnahmeelement einen Fasenabschnitt auf, sodass eine Vorpositionierung des Aufnahmeelements und des Fixierelements gegenüber einander bereitstellbar ist bevor durch das Aufnahmeelement und das Fixierelement zur Verbindung der ersten und zweiten Baugruppe ein gegenseitiger Eingriff ineinander ausgebildet ist.

Nach einer Ausführungsform ist vorgesehen, dass die Vorpositionierung des Aufnahmeelementes und des Fixierelementes einen Ausgleich einer radialen Verschiebung gegenüber einander ermöglicht.

Insbesondere kann anhand wenigstens eines solchen Fasenabschnittes ein Abgleiten des Fixierelementes und des Aufnahmeelementes gegenübereinander bereitgestellt werden, um einen radialen Versatz bzw. einen Versatz in radialer Richtung auszugleichen.

Auf diese Weise kann beim Zusammenfügen der ersten und zweiten Baugruppe ein radialer Versatz ausgeglichen bzw. korrigiert werden. Damit kein ein einfaches und sicheres Ineinandergreifen des Aufnahmeelements und des Fixierelements, zur kraft- und/oder formschlüssigen Verschränkung und vorzugsweise zur Herstellung eines elektrischen Kontakts oder dergleichen, gewährleistet werden.

Nach einer weiteren Ausführungsform sind die erste Baugruppe mit wenigstens einer ersten Leitungskomponente und die zweite Baugruppe mit wenigstens einer zweiten Leitungskomponente ausgestaltet zur Ausbildung einer elektrischen Verbindung, wobei ein elektrischer Kontakt zwischen der ersten und zweiten Baugruppe herstellbar ist nachdem die Vorpositionierung der erste Baugruppe und der zweiten Baugruppe gegenüber einander zumindest im Wesentlichen erfolgt ist.

Insbesondere kann entlang der miteinander zu verbindenden ersten und zweiten Leitungskomponenten eine Energieversorgung der Heizungsvorrichtung über die Steuereinheit eines Luftaufbereitungseinheit bereitstellbar sein.

In einer bevorzugten Ausführungsform sind wenigstens die erste Leitungskomponente und die zweite Leitungskomponente zur Ausbildung einer Steckverbindung miteinander ausgestaltet.

Die erste und zweite Leitungskomponente können in diesem Sinne beispielweise als elektrisch leitende Pins vorgesehen sein, sodass eine Steckverbindung mittels des Aufnahmeelementes und des Fixierelementes eine sichere elektrische Verbindung entlang der ersten und zweiten Leitungskomponenten herstellen kann.

Nach einer weiteren Ausführungsform weist die erste und/oder die zweite Leitungskomponente einen Fasenabschnitt oder dergleichen auf, sodass ein radialer Versatz zwischen der ersten und zweiten Leitungskomponente ausgleichbar ist.

Gemäß einer Ausführungsform ist die erste und/oder die zweite Leitungskomponente zumindest teilweise flexibel verformbar, sodass ein radialer Versatz zwischen der ersten und zweiten Leitungskomponente ausgleichbar ist.

Anhand der Fasenabschnitte sowie der wenigstens teilweise elastischen Verformbarkeit kann auch ein Versatz der Leitungskomponenten in radialer Richtung ausgeglichen werden, um ein sicheres und zuverlässiges Zusammenfügen zur Herstellung einer elektrischen Verbindung bereitstellen zu können, beispielsweise im Rahmen eines automatisierten Montage- bzw. Herstellungsprozesses.

Nach einer bevorzugten Ausführungsform weist die erste Baugruppe und/oder die zweite Baugruppe wenigstens ein Dichtelement auf, zur Abdichtung der zumindest temporären Verbindung zwischen der ersten Baugruppe und der zweiten Baugruppe, insbesondere zur flüssigkeitsdichten Abdichtung.

Die mehrteilige Heizungsvorrichtung kann während der Verwendung, d.h. im zusammengefügten bzw. zusammengesetzten Zustand, vor dem Eindringen von Wasser und elektrischen Kurzschlüssen, Korrosion und dergleichen geschützt werden. Insbesondere kann das Dichtelement als ein Dichtring bzw. O-Ring, als eine Dichtmatte oder dergleichen vorgesehen sein.

Gemäß einer weiteren bevorzugten Ausführungsform sind die erste Baugruppe und/oder die zweite Baugruppe derart ausgestaltet, dass das wenigstens eine Dichtelement an der ersten Baugruppe und/oder der zweiten Baugruppe verliersicher positionierbar ist.

Auf diese Weise ist das Dichtelement auch während des Prozesses zum Zusammenfügen der Baugruppen der Heizungsvorrichtung sicher positioniert, sodass im zusammengefügten Zustand eine Dichtfunktion gewährleistet ist.

Nach einer weiteren Ausführungsform weist wenigstens eine der ersten und zweite Baugruppe ein Befestigungselement auf, zur verliersicheren Anordnung der ersten und/oder zweiten Baugruppe in einer Luftaufbereitungseinheit, vorzugsweise einem ersten Modul und/oder einem zweiten Modul der Luftaufbereitungseinheit und insbesondere in einem zusammengesetzten Zustand der Luftaufbereitungseinheit.

Auf diese Weise kann sichergestellt werden, dass die erste und/oder zweite Baugruppe vorzugsweise vor, während und nach dem Zusammenfügen der Heizungsvorrichtung bzw. der zugehörigen Luftaufbereitungseinheit gesichert positioniert bzw. angeordnet sind.

Insbesondere kann vorgesehen sein, dass das Aufnahmeelement an der ersten Baugruppe der Heizungsvorrichtung und/oder dem ersten Modul der Luftaufbereitungseinheit mittels wenigstens eines Befestigungselementes gesichert bzw. verliersicher positioniert ist und/oder das Fixierelement an der zweiten Baugruppe der Heizungsvorrichtung und/oder dem zweiten Modul der Luftaufbereitungseinheit mittels wenigstens eines Befestigungselementes gesichert bzw. verliersicher positioniert ist.

Im Sinne der vorliegenden Erfindung kann eine Luftaufbereitungseinheit zur Verwendung mit der erfindungsgemäßen Heizungsvorrichtung insbesondere derart vorgesehen sein, dass das erste und/oder zweite Modul (jeweils) zum Ineinandergreifen mit der ersten und/oder zweiten Baugruppe der Heizungsvorrichtung, insbesondere mit jeweils wenigstens einem Befestigungselement, ausgebildet sein kann.

Die erste und/oder zweite Baugruppe der Heizungsvorrichtung können verliersicher angeordnet bzw. positioniert werden, insbesondere innerhalb einer zugehörigen (zusammengesetzten) Luftaufbereitungseinheit.

Nach einem nebengeordneten Aspekt der vorliegenden Erfindung ist eine Luftaufbereitungseinheit, insbesondere eine Lufttrocknungseinheit, mit einer erfindungsgemäßen Heizungsvorrichtung vorgesehen. Gemäß einer bevorzugten Ausführungsform ist die Luftaufbereitungseinheit mit wenigstens einem ersten Modul und einem wenigstens einem zweiten Modul vorgesehen, wobei das erste Modul die erste Baugruppe der Heizungsvorrichtung aufweist und das zweite Modul die zweite Baugruppe der Heizungsvorrichtung aufweist.

Demnach kann die Heizungsvorrichtung vorteilhaft zweiteilig bzw. mehrteilig ausgestaltet und bauraumeffizient angeordnet sein.

Nach einer Ausführungsform ist das erste Modul ein Lufttrocknermodul oder ein Kernmodul der Luftaufbereitungseinheit und das zweite Modul ein Kern- bzw. Hauptmodul oder ein Lufttrocknermodul der Luftaufbereitungseinheit.

Nach einer bevorzugten Ausführungsform ist die Heizungsvorrichtung in der Luftaufbereitungseinheit integriert vorgesehen, insbesondere in einem zusammengesetzten Zustand der Heizungsvorrichtung.

Die erste Heizungsbaugruppe mit Heizungspatrone zur Wärmeerzeugung kann vorzugsweise im Lufttrocknermodul untergebracht sein und einen Teil einer elektrischen Steckerverbindung, insbesondere Heizungspins, besitzen. Die zweite Heizungsbaugruppe für die elektrische Verbindung zur Steuereinheit kann im Kern- bzw. Hauptmodul untergebracht sein und ebenfalls einen Teil einer elektrischen Steckerverbindung, insbesondere Hülsen auf den Verbindungspins, aufweisen.

Es ist eine bauraumeffiziente Anordnung der Heizungsvorrichtung innerhalb einer Luftaufbereitungseinheit verfügbar, die auf einfache und sichere Weise zusammengefügtwerden kann, insbesondere auch im Rahmen eines automatisierten Prozesses.

Die vorliegende Erfindung wird im Folgenden unter Bezugnahme auf die beigefügten Figuren näher im Detail erläutert.

Es zeigen:
- Fig. 1: eine perspektivische Darstellung sowie eine perspektivische Schnittdarstellung einer ersten Baugruppe einer Heizungsvorrichtung gemäß einem ersten Ausführungsbeispiel;
- Fig. 2: eine perspektivische Darstellung einer zweiten Baugruppe einer Heizungsvorrichtung gemäß einem ersten Ausführungsbeispiel;
- Fig. 3: eine Schnittdarstellung der ersten und zweiten Baugruppen gemäß Fig. 1 und 2, im zusammengesetzten Zustand; und
- Fig. 4: eine Schnittdarstellung der verschiedenen Verfahrensschritte zum Zusammensetzen der ersten und zweiten Baugruppe gemäß den Fig. 1 bis 3.

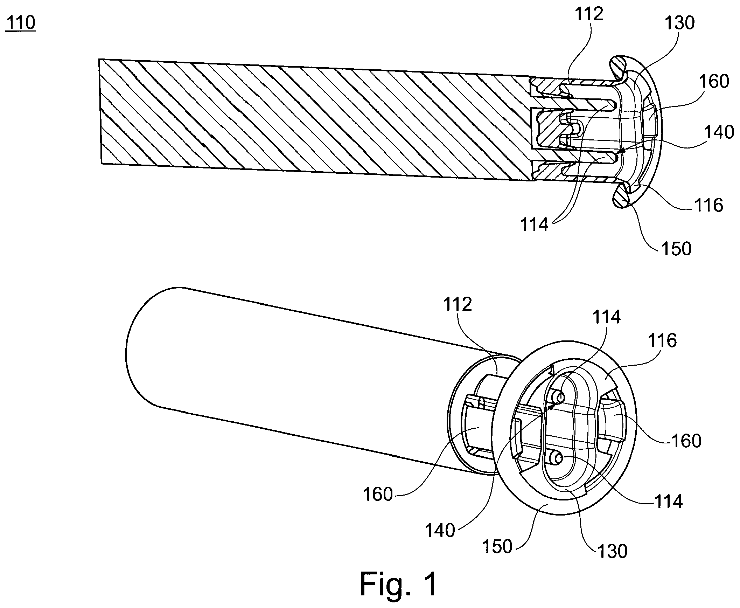

**Fig. 1** zeigt eine perspektivische Darstellung sowie eine perspektivische Schnittdarstellung einer ersten Baugruppe 110 einer Heizungsvorrichtung 100 gemäß einem ersten Ausführungsbeispiel.

Gemäß Fig. 1 ist die erste Baugruppe mit einem Aufnahmeelement 112 und ersten Leistungskomponente 114 ausgebildet.

Die gemäß Fig. 1 gezeigten ersten Leitungskomponenten 114 sind als elektrische (Kontakt-)Pins vorgesehen

Die ersten Leitungskomponenten 114 können an ihrer Spitze jeweils Fasenabschnitte 114 aufweisen.

Die ersten Leitungskomponenten 114 sind von dem Aufnahmeelement 112 umgeben bzw. in dem Aufnahmeelement 112 angeordnet.

Das Aufnahmeelement 112 bildet insbesondere eine Einbuchtung im Sinne einer weiblichen Fügestruktur aus, zur Aufnahme eines korrespondierenden Gegenstücks wie z.B. eines Fixierelementes im Sinne einer männlichen Fügestruktur.

Das Aufnahmeelement 112 ist an seiner Endseite mit einem Fasenabschnitt 130 ausgebildet, insbesondere mit einem innenliegenden und im Wesentlichen umlaufenden Fasenabschnitt 130, um ein Fügen mit einem korrespondierenden Gegenstück, vorzugsweise einem Fixierelement, zu vereinfachen.

Das Aufnahmeelement 112 weist wenigstens ein Befestigungselement 160 auf.

Das Befestigungselement 160 kann im Sinne einer Umfangsrichtung nach außen gerichtet sein, um einen Eingriff in ein Gehäuse oder dergleichen, zur Befestigung bzw. Verschränkung an bzw. entlang der ersten Baugruppe 110, zu ermöglichen.

Des Weiteren kann das Aufnahmeelement 112 wenigstens ein Orientierungselement 116 aufweisen, beispielsweise in Form einer hervorstehenden bzw. hervorragenden Nase, sodass die erste Baugruppe 110 lediglich in einem bestimmten Winkelbereich mit einer korrespondierenden zweiten Baugruppe verbindbar ist.

Es ist möglich, dass die erste Baugruppe 110 bzw. das Aufnahmeelement 112 mehrere gleiche oder unterschiedliche Orientierungselemente 116 aufweist, sodass eine Verbindung mit der ersten Baugruppe nur in einer Richtung bzw. in einem bestimmten Winkelbereich möglich ist. In diesem Sinne erlaubt das wenigstens eine Orientierungselement eine Verbindung mit der ersten Baugruppe nach dem Schlüssel-Schloss-Prinzip.

Die Geometrie, beispielsweise eine Außenkontur, des Aufnahmeelementes 112 und/oder des Fixierelementes 122 kann derart ausgestaltet sein, dass die erste und zweite Baugruppe 110; 120 nur bei Positionierung gegenübereinander in einem bestimmten Ausrichtungs- bzw. Winkelbereich verbindbar sind.

Vorzugsweise kann das Befestigungselement 160 wenigstens teilweise elastisch ausgebildet sein, um eine lösbare Verschränkung, im Sinne einer kraft- und/oder formschlüssigen Verbindung zur Bereitstellung einer Verliersicherung, entlang der ersten Baugruppe 110 bzw. eines ersten Moduls 210 zu ermöglichen.

Gemäß Fig. 1 kann die erste Baugruppe 110 ein Dichtelement 150 aufweisen, vorzugsweise in Form eines Dichtungsrings bzw. O-Rings oder dergleichen.

Das Dichtungselement 150 kann entlang eines Außenumfangs der ersten Baugruppe angeordnet sein und beispielsweise an dem wenigstens einen Befestigungselement 160 aufliegen.

Darüber hinaus kann das Aufnahmeelement 112 zumindest teilweise elastisch verformbar ausgebildet sein, insbesondere ein zumindest teilweise elastisch verformbares Material aufweisen.

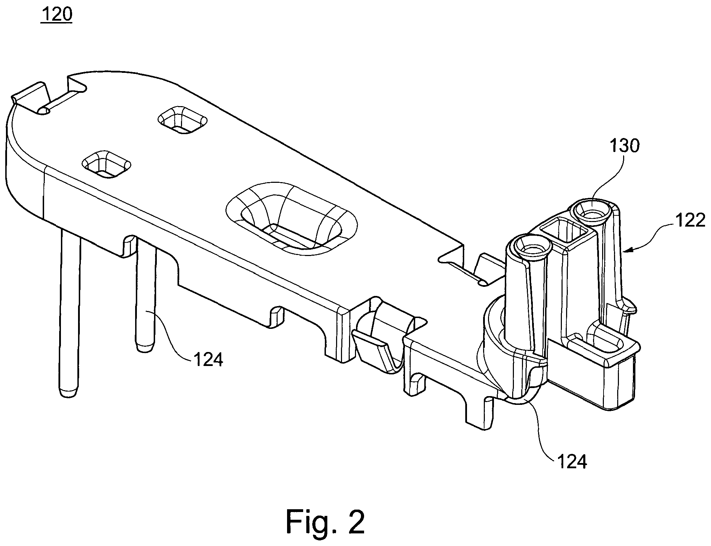

**Fig. 2** zeigt eine perspektivische Darstellung einer zweiten Baugruppe 120 einer Heizungsvorrichtung 100 gemäß einem ersten Ausführungsbeispiel.

Die zweite Baugruppe 120 kann insbesondere mit einem Fixierelement 122, vorzugsweise im Sinne einer männlichen Fügestruktur, ausgebildet sein.

Das Fixierelement 122 kann einteilig oder mehrteilig ausgebildet sein. Gemäß Fig. 2 ist das Fixierelement der zweiten Baugruppe 122 mit zusätzlichen Hülseneinsätzen vorgesehen, insbesondere zur Aufnahme von ersten bzw. zweiten Leitungskomponenten 114; 124.

Gemäß Fig. 2 erstreckt sich die wenigstens eine zweite Leitungskomponente 124 entlang der zweiten Baugruppe 120 und ist innerhalb des Fixierelementes 122 angeordnet bzw. aufgenommen.

Das Fixierelement 122 ist mit einem Fasenabschnitt 130 ausgebildet, insbesondere sodass ein Einführen von ersten Leitungskomponente 114, vorzugsweise in Form von (Verbindungs-)Pins, ermöglicht werden kann.

Das Fixierelement 122 mit dem Fasenabschnitt 130 kann somit zur Befestigung der zweiten Baugruppe dienen, wobei die Verbindung der zweiten Leitungskomponente 124 mit der ersten Leitungskomponente 114 innerhalb des Fixierelementes 122 auf vorteilhafte Weise ermöglicht wird.

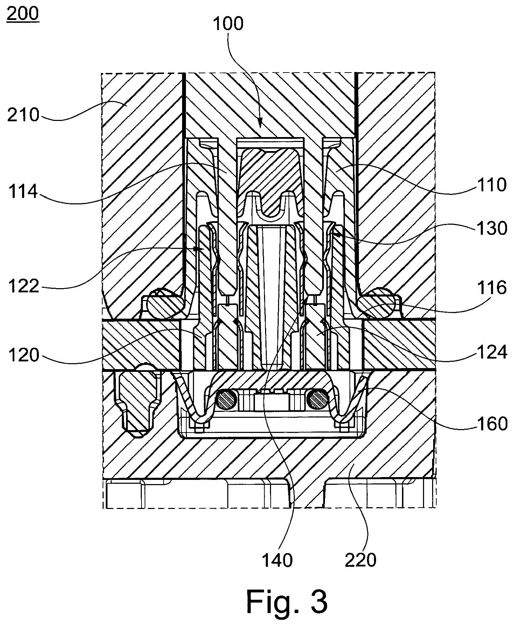

**Fig. 3** zeigt eine Schnittdarstellung der ersten und zweiten Baugruppen 110; 120 einer Heizungsvorrichtung 100 gemäß Fig. 1 und 2, im zusammengesetzten bzw. zusammengefügten Zustand. Insbesondere kann die Heizungsvorrichtung 100 als ein Teil einer Luftaufbereitungseinheit 200, beispielsweise einer Lufttrocknereinheit, vorgesehen sein.

Die erste Baugruppe 110 kann beispielsweise in einem ersten Modul 210 vorgesehen bzw. angeordnet sein. Das erste Modul 210 kann beispielsweise ein Lufttrocknermodul oder ein Haupt- bzw. Kernmodul sein.

Die zweite Baugruppe 120 kann gemäß Fig. 3 in einem zweiten Modul 220 vorgesehen bzw. angeordnet sein. Das zweite Modul 220 kann beispielsweise, insbesondere korrespondierend zum ersten Modul 210, ein Haupt- bzw. Kernmodul oder ein Lufttrocknermodul sein.

Die Heizungsvorrichtung 100 kann entlang der elektrisch miteinander zu verbindenden ersten und zweiten Leitungskomponenten 114; 124 über eine Steuereinheit des Haupt- bzw. Kernmoduls mit Strom versorgt werden.

Insbesondere ist gemäß Fig. 3 vorgesehen, dass das Dichtelement 150 im zusammengesetzten Zustand der Luftaufbereitungseinheit 200 bzw. der Heizungsvorrichtung 100 an bzw. zwischen dem ersten und/oder zweiten Modul 210; 220 verpresst werden kann, insbesondere sodass eine fluiddichte Verbindung entlang der Schnittstelle zwischen dem ersten und zweiten Modul 210; 220 bereitgestellt werden kann.

Des Weiten ist aus Fig. 3 ersichtlich, dass das Fixierelement 122 der zweiten Baugruppe 120 in dem Aufnahmeelement 112 der ersten Baugruppe 110 der Heizungsvorrichtung 100 aufgenommen ist, sodass eine elektrische Kontaktierung zwischen den ersten und zweiten Leitungskomponenten 114; 124 bereitstellbar ist. Insbesondere können die ersten und zweiten Leitungskomponenten in dem Aufnahmeelement 122 derart aufeinander ausgerichtet und geführt werden, dass eine sichere und zuverlässige elektrische Kontaktierung möglich ist.

Im zusammengesetzten Zustand der Heizungsvorrichtung 100 greifen das Aufnahmeelement 112 und das korrespondierende Fixierelement 122 ineinander ein, um eine elektrische Verbindung über die ersten und zweiten Leitungskomponenten 114; 124 bereitstellen zu können.

Die Befestigungselemente 160 der ersten Baugruppe 110 und/oder der zweiten Baugruppe 120 der Heizungsvorrichtung 100 können eine Verliersicherung, insbesondere vor, während und nach der Montage der ersten und zweiten Baugruppe 110; 120, bereitstellen. In diesem Sinne können die erste und zweite Baugruppe 110; 120 jeweils in dem ersten bzw. zweiten Modul 210; 220 gehalten werden, sodass eine Montage bzw. ein Zusammenbau der Heizungsvorrichtung erleichtert wird.

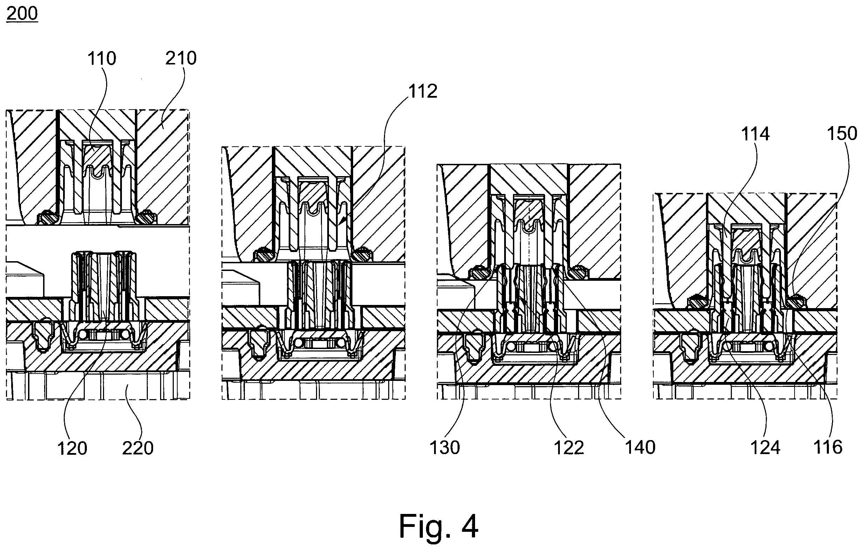

**Fig. 4** zeigt eine Schnittdarstellung der verschiedenen Verfahrensschritte zum Zusammensetzen der ersten und zweiten Baugruppe 110; 120 der Heizungsvorrichtung 100 gemäß den Fig. 1 bis 3.

In einem Schritt werden die erste Baugruppe 110 und die zweite Baugruppe 120 bzw. das erste und zweite Modul 210; 220 grob aufeinander ausgerichtet.

Sobald zwischen dem Aufnahmeelement 112 und dem Fixierelement 122 ein erster Kontakt hergestellt ist, können das Fixierelement und das Aufnahmeelement entlang der Fasenabschnitten 130 gegenübereinander derart abgleiten, dass eine Vorpositionierung erfolgen kann, zum Ausgleich eines Versatzes in radialer Richtung. Ebenso können die ersten Leitungskomponenten der ersten Baugruppe einen Fasenabschnitt 140 aufweisen, sodass ein Abgleiten gegenüber den Fasenabschnitten des Fixierelementes 122 erfolgen kann.

Das Fixierelement 122 und das Aufnahmeelement 112 können insbesondere wenigstens teilweise elastisch verformbar sein, um das Zusammenfügen und Ausrichten aufeinander zu erleichtern.

Sobald die ersten Leitungskomponenten 114 in dem Fixierelement 122 aufgenommen bzw. eingeführt sind, kann durch Zusammenfügen des ersten und zweiten Moduls 210; 220 eine Verpressung des Dichtelementes 150 erfolgen, sodass eine fluiddichte Schnittstelle bereitgestellt werden kann.

Zusammenfassend stellt die vorliegende Erfindung eine einfache und sichere Möglichkeit zur Verbindung zwei Baugruppen 110; 120 einer Heizungsvorrichtung 100 bereit.

Anhand einer geometrischen Ausgestaltung der Baugruppen 110; 120, beispielsweise mittels Orientierungselementen 116, kann eine korrekte Ausrichtung bzw.

Positionierung der Baugruppen 110; 120 relativ zueinander sichergestellt werden.

Die Ausbildung von Fasenabschnitten 130; 140 erlaubt einen Ausgleich von radialen Versätzen der Baugruppen zueinander, sodass ein sicheres Zusammenfügen der Baugruppen 110; 120 gewährleistet ist, um eine elektrische Verbindung entlang der Leitungskomponenten 114; 124 zu ermöglichen.

Die Baugruppen 110; 120, insbesondere das Aufnahmeelement 112 und/oder das Fixierelement 122 können hierbei wenigstens teilweise elastisch verformbar sein, um einen radialen Versatz beim Zusammenfügen ausgleichen und den Fügevorgang erleichtern zu können.

Des Weiteren kann anhand von Befestigungselementen 160 eine Verliersicherung für das Aufnahmeelement 112 und/oder das Fixierelement 122 bereitgestellt werden, sodass eine sichere und zuverlässige Befestigung innerhalb des ersten und/oder zweiten Moduls 210; 220 vor, während und nach dem Zusammenfügen der Heizungsvorrichtung 100 sichergestellt werden kann.

### BEZUGSZEICHENLISTE

- 100: Heizungsvorrichtung
- 110: erste Baugruppe
- 112: Aufnahmeelement
- 114: erste Leitungskomponente
- 116: Orientierungselement
- 120: zweite Baugruppe
- 122: Fixierelement
- 124: zweite Leitungskomponente
- 130: Fasenabschnitt
- 140: Fasenabschnitt
- 150: Dichtelement
- 160: Befestigungselement
- 200: Luftaufbereitungseinheit
- 210: erstes Modul
- 220: zweites Modul

## Patentansprüche

1. Heizungsvorrichtung (100) für eine Luftaufbereitungseinheit (200) mit wenigstens einer ersten Baugruppe (110) und einer zweiten Baugruppe (120), wobei die erste Baugruppe (110) wenigstens ein Aufnahmeelement (112) und die zweite Baugruppe (120) wenigstens ein Fixierelement (122) aufweist, wobei das wenigstens eine Aufnahmeelement (112) und das wenigstens eine Fixierelement (122) zum Eingriff ineinander ausgebildet sind, zur zumindest temporären Verbindung der ersten Baugruppe (110) und der zweiten Baugruppe (120) miteinander, wobei das Aufnahmeelement (112) und/oder das Fixierelement (122) derart ausgestaltet sind, vorzugsweise derart mit einem Orientierungselement (116) ausgestaltet sind, dass das Aufnahmeelement (112) und das Fixierelement (122) in einem vordefinierten Ausrichtungsbereich, insbesondere einem vordefinierten Winkelbereich, gegenübereinander verbindbar sind.

2. Heizungsvorrichtung (100) nach Anspruch 1,
**dadurch gekennzeichnet, dass**
die erste Baugruppe (110) und/oder die zweite Baugruppe (120) wenigstens teilweise elastisch verformbar ausgebildet ist, insbesondere das Aufnahmeelement (112) und/oder das Fixierelement (122) wenigstens teilweise elastisch verformbar ist.

3. Heizungsvorrichtung (100) nach Anspruch 1 oder 2,
**dadurch gekennzeichnet, dass**
das Fixierelement (122) und/oder das Aufnahmeelement (112) einen Fasenabschnitt (130) aufweist, sodass eine Vorpositionierung des Aufnahmeelements (112) und des Fixierelements (122) gegenüber einander bereitstellbar ist bevor durch das Aufnahmeelement (112) und das Fixierelement (122) zur Verbindung der ersten und zweiten Baugruppe (110; 120) ein gegenseitiger Eingriff ineinander ausgebildet ist.

4. Heizungsvorrichtung (100) nach Anspruch 3,
**dadurch gekennzeichnet, dass**
die Vorpositionierung des Aufnahmeelementes (112) und des Fixierelementes (122) einen Ausgleich einer radialen Verschiebung gegenübereinander ermöglicht.

5. Heizungsvorrichtung (100) nach Anspruch 3 oder 4,
**dadurch gekennzeichnet, dass**
die erste Baugruppe (110) mit wenigstens einer ersten Leitungskomponente (114) und die zweite Baugruppe (120) mit wenigstens einer zweiten Leitungskomponente (124) ausgestaltet sind zur Ausbildung einer elektrischen Verbindung,
wobei ein elektrischer Kontakt zwischen der ersten und zweiten Baugruppe (110; 120) herstellbar ist nachdem die Vorpositionierung der erste Baugruppe (110) und der zweiten Baugruppe (120) gegenüber einander zumindest im Wesentlichen erfolgt ist.

6. Heizungsvorrichtung (100) nach Anspruch 5,
**dadurch gekennzeichnet, dass**
wenigstens die erste Leitungskomponente (114) und die zweite Leitungskomponente (124) zur Ausbildung einer Steckverbindung miteinander ausgestaltet sind.

7. Heizungsvorrichtung (100) nach Anspruch 6,
**dadurch gekennzeichnet, dass**
die erste und/oder die zweite Leitungskomponente (114; 124) einen Fasenabschnitt (140) oder dergleichen aufweist, sodass ein radialer Versatz zwischen der ersten und zweiten Leitungskomponente (114; 124) ausgleichbar ist.

8. Heizungsvorrichtung (100) nach Anspruch 6 oder 7,
**dadurch gekennzeichnet, dass**
die erste und/oder die zweite Leitungskomponente (114; 124) zumindest teilweise flexibel verformbar ist, sodass ein radialer Versatz zwischen der ersten und zweiten Leitungskomponente (114; 124) ausgleichbar ist.

9. Heizungsvorrichtung (100) nach einem der vorhergehenden Ansprüche,
**dadurch gekennzeichnet, dass**
die erste Baugruppe (110) und/oder die zweite Baugruppe (120) wenigstens ein Dichtelement (150) aufweist, zur Abdichtung der zumindest temporären Verbindung zwischen der ersten Baugruppe (110) und der zweiten Baugruppe (120), insbesondere zur flüssigkeitsdichten Abdichtung.

10. Heizungsvorrichtung (100) nach Anspruch 9,
**dadurch gekennzeichnet, dass**
die erste Baugruppe (110) und/oder die zweite Baugruppe (120) derart ausgestaltet sind, dass das wenigstens eine Dichtelement (150) an der ersten Baugruppe (110) und/oder der zweiten Baugruppe (120) verliersicher positionierbar ist.

11. Heizungsvorrichtung (100) nach Anspruch 9,
**dadurch gekennzeichnet, dass**
wenigstens eine der ersten und zweite Baugruppe (110; 120) ein Befestigungselement (160) aufweist, zur verliersicheren Anordnung der ersten und/oder zweiten Baugruppe (110; 120) in einer Luftaufbereitungseinheit (200), vorzugsweise an einem ersten Modul (210) und/oder einem zweiten Modul (220) der Luftaufbereitungseinheit (200) und insbesondere in einem zusammengesetzten Zustand der Luftaufbereitungseinheit (200).

12. Luftaufbereitungseinheit (200), insbesondere Lufttrocknungseinheit, mit einer Heizungsvorrichtung (100) gemäß einem der vorhergehenden Ansprüche,

13. Luftaufbereitungseinheit (200) nach Anspruch 12,
**dadurch gekennzeichnet, dass**
die Luftaufbereitungseinheit (200) mit wenigstens einem ersten Modul (210) und wenigstens einem zweiten Modul (220) vorgesehen ist,
wobei das erste Modul (210) die erste Baugruppe (110) der Heizungsvorrichtung (100) aufweist und das zweite Modul (220) die zweite Baugruppe (120) der Heizungsvorrichtung (100) aufweist.

14. Luftaufbereitungseinheit (200) nach Anspruch 13,
**dadurch gekennzeichnet, dass**
das erste Modul (210) ein Lufttrocknermodul oder ein Kernmodul der Luftaufbereitungseinheit (200) ist und das zweite Modul (220) ein Kernmodul oder ein Lufttrocknermodul der Luftaufbereitungseinheit (200) ist.

15. Luftaufbereitungseinheit (200) nach einem der Ansprüche 12 bis 14.
**dadurch gekennzeichnet, dass**
die Heizungsvorrichtung (100) in der Luftaufbereitungseinheit (200) integriert vorgesehen ist, insbesondere in einem zusammengesetzten Zustand der Heizungsvorrichtung (100).

## Claims

1. A heating device (100) for an air treatment unit (200), having at least one first assembly (110) and a second assembly (120),
wherein the first assembly (110) has at least one receptacle element (112), and the second assembly (120) has at least one fixing element (122),
wherein the at least one receptacle element (112) and the at least one fixing element (122) are designed to engage in one another, so as to at least temporarily connect the first assembly (110) and the second assembly (120) to one another,
wherein the receptacle element (112) and/or the fixing element (122) are/is designed in such a manner, preferably are/is designed having an orientation element (116) in such a manner that the receptacle element (112) and the fixing element (122) are able to be connected in a predefined alignment range, in particular a predefined angular range, relative to one another.

2. The heating module (100) as claimed in claim 1,
**characterized in that**
the first assembly (110) and/or the second assembly (120) are/is designed to be at least partially elastically deformable, in particular the receptacle element (112) and/or the fixing element (122) being at least partially elastically deformable.

3. The heating module (100) as claimed in claim 1 or 2,
**characterized in that**
the fixing element (122) and/or the receptacle element (112) have/has a chamfer portion (130), so that preliminary positioning of the receptacle element (112) and of the fixing element (122) relative to one another is able to be provided before a mutual engagement is formed by the receptacle element (112) and the fixing element (122) for connecting the first and the second assembly (110; 120).

4. The heating module (100) as claimed in claim 3,
**characterized in that**
the preliminary positioning of the receptacle element (112) and of the fixing element (122) enables a mutual radial displacement to be compensated.

5. The heating module (100) as claimed in claim 3 or 4,
**characterized in that**
the first assembly (110) is designed having at least one first line component (114), and the second assembly (120) is designed having at least one second line component (124), for forming an electrical connection,
wherein an electrical contact between the first and the second assembly (110; 120) is able to be established once the preliminary positioning of the first assembly (110) and of the second assembly (120) relative to one another has been at least substantially performed.

6. The heating module (100) as claimed in claim 5,
**characterized in that**
at least the first line component (114) and the second line component (124) are designed to form a mutual plug connection.

7. The heating module (100) as claimed in claim 6,
**characterized in that**
the first and/or the second line component (114; 124) has a chamfer portion (140) or the like, so that a radial offset between the first and the second line component (114; 124) is able to be compensated.

8. The heating module (100) as claimed in claim 6 or 7,
**characterized in that**
the first and/or the second line component (114; 124) are/is at least partially flexibly deformable, so that a radial offset between the first and the second line component (114; 124) is able to be compensated.

9. The heating module (100) as claimed in one of the preceding claims,
**characterized in that**
the first assembly (110) and/or the second assembly (120) have/has at least one sealing element (150) for sealing, in particular for sealing in a liquid-tight manner, the at least temporary connection between the first assembly (110) and the second assembly (120).

10. The heating module (100) as claimed in claim 9,
**characterized in that**
the first assembly (110) and/or the second assembly (120) are/is designed in such a manner that the at least one sealing element (150) is able to be captively positioned on the first assembly (110) and/or the second assembly (120).

11. The heating module (100) as claimed in claim 9,
**characterized in that**
at least one of the first and the second assembly (110; 120) has a fastening element (160) for captively disposing the first and/or the second assembly (110; 120) in an air treatment unit (200), preferably on a first module (210) and/or a second module (220) of the air treatment unit (200), and in particular in an assembled state of the air treatment unit (200).

12. An air treatment unit (200), in particular an air dryer unit, having a heating device (100) as claimed in one of the preceding claims.

13. The air treatment unit (200) as claimed in claim 12,
**characterized in that**
the air treatment unit (200) is provided with at least one first module (210) and at least one second module (220),
wherein the first module (210) has the first assembly (110) of the heating device (100), and the second module (220) has the second assembly (120) of the heating device (100).

14. The air treatment unit (200) as claimed in claim 13,
**characterized in that**
the first module (210) is an air dryer module or a core module of the air treatment unit (200), and the second module (220) is a core module or an air dryer module of the air treatment unit (200).

15. The air treatment unit (200) as claimed in one of claims 12 to 14,
**characterized in that**
the heating device (100) is provided so as to be integrated into the air treatment unit (200), in particular in an assembled state of the heating device (100).

## Revendications

1. Dispositif de chauffage (100) pour une unité de traitement d'air (200) avec au moins un premier ensemble (110) et un second ensemble (120),
dans lequel le premier ensemble (110) présente au moins un élément de réception (112) et le second ensemble (120) présente au moins un élément de fixation (122),
dans lequel l'au moins un élément de réception (112) et l'au moins un élément de fixation (122) sont formés pour la prise l'un dans l'autre pour la liaison au moins temporaire du premier ensemble (110) et du second ensemble (120) l'un avec l'autre,
dans lequel l'élément de réception (112) et/ou l'élément de fixation (122) sont configurés de telle manière, de préférence sont configurés avec un élément d'orientation (116) de telle manière que l'élément de réception (112) et l'élément de fixation (122) puissent être reliés dans une zone d'orientation prédéfinie, en particulier une zone angulaire prédéfinie, l'un par rapport à l'autre.

2. Dispositif de chauffage (100) selon la revendication 1,
**caractérisé en ce que**
le premier ensemble (110) et/ou le second ensemble (120) est formé de manière au moins partiellement déformable élastiquement, en particulier l'élément de réception (112) et/ou l'élément de fixation (122) est déformable de manière au moins partiellement élastiquement.

3. Dispositif de chauffage (100) selon la revendication 1 ou 2,
**caractérisé en ce que**
l'élément de fixation (122) et/ou l'élément de réception (112) présente une section de chanfrein (130) de sorte qu'un prépositionnement de l'élément de réception (112) et de l'élément de fixation (122) l'un par rapport à l'autre puisse être fourni avant qu'une prise mutuelle l'un dans l'autre ne soit formé par l'élément de réception (112) et l'élément de fixation (122) pour la liaison du premier et second ensemble (110 ; 120).

4. Dispositif de chauffage (100) selon la revendication 3,
**caractérisé en ce que**
le prépositionnement de l'élément de réception (112) et de l'élément de fixation (122) permet une compensation d'un déplacement radial l'un par rapport à l'autre.

5. Dispositif de chauffage (100) selon la revendication 3 ou 4,
**caractérisé en ce que**
le premier ensemble (110) avec au moins un premier composant de conduite (114) et le second ensemble (120) avec au moins un second composant de conduite (124) sont configurés pour la formation d'une liaison électrique,
dans lequel un contact électrique peut être établi entre le premier et le second ensemble (110 ; 120) après que le prépositionnement du premier ensemble (110) et du second ensemble (120) l'un par rapport à l'autre a été effectué au moins sensiblement.

6. Dispositif de chauffage (100) selon la revendication 5,
**caractérisé en ce que**
au moins le premier composant de conduite (114) et le second composant de conduite (124) sont configurés pour la formation d'une liaison d'enfichage l'un avec l'autre.

7. Dispositif de chauffage (100) selon la revendication 6,
**caractérisé en ce que**
le premier et/ou le second composant de conduite (114 ; 124) présente une section de chanfrein (140) ou similaire de sorte qu'un déport radial entre le premier et le second composant de conduite (114 ; 124) puisse être compensé.

8. Dispositif de chauffage (100) selon la revendication 6 ou 7,
**caractérisé en ce que**
le premier et/ou le second composant de conduite (114 ; 124) est déformable de manière flexible au moins partiellement de sorte qu'un déport radial entre le premier et le second composant de conduite (114 ; 124) puisse être compensé.

9. Dispositif de chauffage (100) selon l'une quelconque des revendications précédentes,
**caractérisé en ce que**
le premier ensemble (110) et/ou le second ensemble (120) présente au moins un élément étanche (150) pour l'étanchéité de l'au moins une liaison temporaire entre le premier ensemble (110) et le second ensemble (120), en particulier pour l'étanchéité étanche au liquide.

10. Dispositif de chauffage (100) selon la revendication 9,
**caractérisé en ce que**
le premier ensemble (110) et/ou le second ensemble (120) sont configurés de telle manière que l'au moins un élément étanche (150) puisse être positionné de manière imperdable au niveau du premier ensemble (110) et/ou du second ensemble (120).

11. Dispositif de chauffage (100) selon la revendication 9,
**caractérisé en ce que**
au moins un du premier et second ensemble (110 ; 120) présente un élément de fixation (160) pour l'agencement imperdable du premier et/ou second ensemble (110 ; 120) dans une unité de traitement d'air (200), de préférence au niveau d'un premier module (210) et/ou d'un second module (220) de l'unité de traitement d'air (200) et en particulier dans un état assemblé de l'unité de traitement d'air (200).

12. Unité de traitement d'air (200), en particulier unité de séchage d'air, avec un dispositif de chauffage (100) selon l'une quelconque des revendications précédentes.

13. Unité de traitement d'air (200) selon la revendication 12,
**caractérisée en ce que**
l'unité de traitement d'air (200) est prévue avec au moins un premier module (210) et au moins un second module (220),
dans laquelle le premier module (210) présente le premier ensemble (110) du dispositif de chauffage (100) et le second module (220) présente le second ensemble (120) du dispositif de chauffage (100).

14. Unité de traitement d'air (200) selon la revendication 13,
**caractérisée en ce que**
le premier module (210) est un module de séchage d'air ou un module de base de l'unité de traitement d'air (200) et le second module (220) est un module de base ou un module de séchage d'air de l'unité de traitement d'air (200).

15. Unité de traitement d'air (200) selon l'une quelconque des revendications 12 à 14,
**caractérisée en ce que**
le dispositif de chauffage (100) est prévu de manière intégrée dans l'unité de traitement d'air (200), en particulier dans un état assemblé du dispositif de chauffage (100).
